# EUROPÄISCHE PATENTSCHRIFT

(11) **EP 3 704 927 B1**
(45) Veröffentlichungstag und Bekanntmachung des Hinweises auf die Patenterteilung: **09.02.2022**
(21) Anmeldenummer: 19214391.5
(22) Anmeldetag: 09.12.2019
(51) Int. Cl.: A01D 34/30

(54) **SCHNEIDWERK FÜR EINE LANDWIRTSCHAFTLICHE ERNTEMASCHINE**
CUTTING ASSEMBLY FOR AN AGRICULTURAL HARVESTER
BARRE DE COUPE POUR MACHINE DE RÉCOLTE AGRICOLE

(30) Priorität: 06.03.2019 DE 102019105635
(43) Veröffentlichungstag der Anmeldung: 09.09.2020
(73) Patentinhaber: CLAAS Selbstfahrende Erntemaschinen GmbH, 33428 Harsewinkel (DE)
(72) Erfinder: Lütkeschümer, Malte, 49080 Osnabrück (DE); Eidhoff, Lukas, 33321 Gütersloh (DE); Dehmelt, Jan, 33649 Bielefeld (DE); Herter, Felix, 33428 Harsewinkel (DE)
(74) Vertreter: CLAAS Gruppe

(56) Entgegenhaltungen:
- DE-A1-102009 040 230
- DE-A1-102010 040 870
- DE-A1-102015 106 087
- US-A- 4 198 803
- US-B1- 8 011 272

## Beschreibung

### Einleitung

Die vorliegende Anmeldung betrifft ein Schneidwerk für eine landwirtschaftliche Erntemaschine, insbesondere für einen Mähdrescher, gemäß dem Oberbegriff von Anspruch 1.

Ein solches Schneidwerk umfasst einen sich in Breitenrichtung des Schneidwerks erstreckenden Mähbalken, der mit mindestens einem Mähsegment, vorzugsweise einer Mehrzahl von Mähsegmenten, ausgestattet ist. Sofern mehrere Mähsegmente, insbesondere zwei Mähsegmenten, vorhanden sind, sind diese typischerweise nebeneinander angeordnet, wobei sie sich jeweils über eine halbe Breite des Schneidwerks erstrecken. Das mindestens eine Mähsegment umfasst eine Mehrzahl, typischerweise zwei, Mähmesser, die relativ zueinander oszillierend antreibbar sind. Hierzu verfügt das Schneidwerk über mindestens eine Antriebseinrichtung, die mittelbar oder unmittelbar mit mindestens einem der Mähmesser zusammenwirkt. Mittels der oszillierenden Bewegung der Mähmesser relativ zueinander ist der Mähbalken dazu geeignet, zu erntende Pflanzen zu schneiden. Diese werden sodann typischerweise auf einem Schneidwerkstisch des Schneidwerks abgelegt und mittels einer Einzugswalze weitertransportiert.

Schneidwerke der eingangs beschriebenen Art sind im Stand der Technik bereits bekannt. Hierzu wird beispielhaft auf die Europäische Patentanmeldung EP 1 935 226 B1 verwiesen. Diese beschreibt ein Schneidwerk, dessen Antriebseinrichtung mit einem Planetenantrieb ausgestattet ist. Dieser bietet den Vorteil, vergleichsweise platzsparend ausgeführt werden zu können, sodass ein Bauraum, der für die Antriebseinrichtung vorgehalten werden muss, vergleichsweise klein gehalten werden kann. Allerdings ist die Antriebseinrichtung insoweit nachteilig, als ihre Konstruktion aufwendig und fehleranfällig ist, sodass ein Wartungsaufwand für ein mit einer solchen Antriebseinrichtung ausgestattetes Schneidwerk vergleichsweise hoch ist.

Der vorliegenden Anmeldung liegt mithin die Aufgabe zugrunde, ein Schneidwerk bereitzustellen, das einfacher konstruiert und weniger fehleranfällig ist.

Die zugrunde liegende Aufgabe wird erfindungsgemäß mittels eines Schneidwerks mit den Merkmalen des Anspruchs 1 gelöst. Vorteilhafte Ausgestaltungen ergeben sich aus den Unteransprüchen 2 bis 15.

Das erfindungsgemäße Schneidwerk ist dadurch gekennzeichnet, dass seine Antriebseinrichtung mindestens ein Kurbelgetriebe umfasst. Dieses Kurbelgetriebe ist erfindungsgemäß außermittig bezogen auf das Schneidwerk angeordnet. Das heißt, dass das Kurbelgetriebe - in Breitenrichtung des Schneidwerks betrachtet - seitlich neben einer querseitigen Mitte des Schneidwerks angeordnet ist. Vorzugsweise ist das Kurbelgetriebe dabei insbesondere nicht in seitlich außenliegenden Ende des Schneidwerks angeordnet. Ferner ist das Kurbelgetriebe erfindungsgemäß unterhalb eines Schneidwerkstischs des Schneidwerks angeordnet. Der Schneidwerkstisch dient gemäß vorstehender Erläuterung dazu, geschnittene Pflanzen abzulegen, sodass sie (typischerweise mittels einer Einzugswalze) weiter gefördert und sodann verarbeitet werden können.

Das erfindungsgemäße Schneidwerk hat viele Vorteile. Zum einen ist die Ausgestaltung der Antriebseinrichtung mit einem Kurbelgetriebe deutlich einfacher als der im Stand der Technik beschriebene Planetenantrieb. Zudem anderen bietet die außermittige, unterhalb des Schneidwerkstischs befindliche Anordnung des Kurbelgetriebes den besonderen Vorteil, dass eine Tragwerksstruktur des Schneidwerks insbesondere in ihrem Mittelbereich kaum durch den für das Kurbelgetriebe erforderlichen Bauraum beeinträchtigt wird. Dies ist insoweit von Bedeutung, als die mechanische Belastung des Schneidwerks typischerweise in dessen Mittelbereich maximal ist. Dies liegt darin begründet, dass das Schneidwerk in seinem Mittelbereich an eine übergeordnete Struktur einer jeweiligen Erntemaschine, beispielsweise an einen Schrägförderer eines Mähdreschers, angehängt ist und die seitlichen Bereiche des Schneidwerks sich beidseits des so als Auflager fungierenden Mittelbereichs mechanisch betrachtet als Kragarme ausgehend von dem Mittelbereich weg erstrecken. Die Belastung der Tragwerkstruktur des Schneidwerks in dessen Mittelbereich infolge dadurch bedingter Biegemomente ist entsprechend deutlich größer, als in den Seitenbereichen des Schneidwerks. Die außermittige Anordnung des Kurbelgetriebes bietet mithin den Vorteil, dass der für das Kurbelgetriebe erforderliche Bauraum abseits der strukturell stark belasteten Mitte des Schneidwerks anfällt, sodass die Tragwerkstruktur des Schneidwerks insbesondere nicht in ihrem Mittelbereich geschwächt werden muss. Zusätzlich bietet die Anordnung des Kurbelgetriebes unterhalb des Schneidwerkstischs den Vorteil, dass zudem der Eingriff in die Tragwerkstruktur des Schneidwerks auf ein Minimum reduziert ist.

Im Ergebnis bietet die Erfindung den Vorteil, dass das Schneidwerk mit einer technisch einfachen Antriebseinrichtung ausgestattet ist, deren Eingriff in die Tragwerkstruktur des Schneidwerks minimal ist. Die erfindungsgemäße Schneidwerk bietet mithin die gewünschte hohe Betriebssicherheit.

Vorteilhafterweise ist das mindestens eine Kurbelgetriebe in der Tragwerksstruktur des Schneidwerks integriert und auf diese Weise von äußeren Einflüssen, insbesondere Verschmutzungen, geschützt. Mittels der direkten Integration in die Tragwerksstruktur kann auch eine gesonderte Kapselung verzichtet werden.

In einer vorteilhaften Ausgestaltung des erfindungsgemäßen Schneidwerks beträgt ein seitlicher, parallel zu der Breitenrichtung des Schneidwerks gemessener Abstand zwischen dem mindestens einen Kurbelgetriebe und der querseitigen Mitte des Schneidwerks mindestens 20 % einer halben Breite des Schneidwerks. Vorzugsweise beträgt besagter Abstand mindestens 30 %, weiter vorzugsweise mindestens 40 %, der halben Breite des Schneidwerks. Gemäß vorstehender Erläuterung ist ein Abstand zwischen dem Kurbelgetriebe und der querseitigen Mitte des Schneidwerks im Hinblick auf die Tragwerksstruktur des Schneidwerks vorteilhaft, da mit zunehmendem Abstand von der Mitte die mechanische Belastung der Tragwerksstruktur abnimmt. Die Schwächen der Tragwerksstruktur infolge des für das Kurbelgetriebe erforderlichen Bauraums ist folglich vorteilhafterweise möglichst weit von der Mitte des Schneidwerks entfernt.

In einer besonders vorteilhaften Ausgestaltung des erfindungsgemäßen Schneidwerks umfasst selbiges eine Mehrzahl von Kurbelgetrieben, insbesondere zwei Kurbelgetriebe. Diese sind außermittig bezogen auf das Schneidwerk angeordnet, wobei vorzugsweise eine symmetrische Anordnung gewählt ist, sodass sich die Kurbelgetriebe im gleichen Abstand bezogen auf die querseitigen Mitte des Schneidwerks befinden. Der symmetrische Aufbau ist im Hinblick auf eine Antriebscharakteristik der Kurbelgetriebe in Zusammenwirkung mit den Mähsegmenten bzw. den Mähmessern vorteilhaft. Vorteilhafterweise wirkt jedes Mähsegment des Mähbalkens mit einem ihm zugeordneten Kurbelgetriebe zusammen. Idealerweise wirkt das Kurbelgetriebe mit einem Mähmesser eines jeweiligen Mähsegments zusammen, das mittels des Kurbelgetriebes in eine Bewegung relativ zu dem anderen Mähmesser desselben Mähsegments bewegt wird. Das jeweils andere Mähmesser ist typischerweise stillstehend ausgebildet und wirkt mithin gewissermaßen als Gegenmesser für das sich bewegende Mähmesser.

Grundsätzlich unabhängig von der genannten symmetrischen Anordnung, gleichwohl vorteilhafterweise in Kombination mit einer solchen, kann es weiterhin vorteilhaft sein, wenn sämtliche Kurbelgetriebe unterhalb des Schneidwerkstischs angeordnet sind. Die vorstehend im Zusammenhang den mindestens einen Kurbelgetriebe genannten Vorteile ergeben sich hierbei analog.

Das erfindungsgemäße Schneidwerk weiter ausgestaltend weist das Kurbelgetriebe einen Exzenter auf, der an einer Anlenkstelle einer Schwinge angelenkt ist. Die Schwinge umfasst zwei Endbereiche, wobei der erste Endbereich unter Ausbildung eines Drehgelenks gelenkig an dem Schneidwerk gelagert ist und der zweite, dem ersten Endbereich gegenüberliegende Endbereich mittels eines Kopplungsmittels mit mindestens einem der Mähmesser gekoppelt ist. Eine oszillierende Verschwenkung der Schwinge um ihr endseitiges Drehgelenk führt mithin zu einer entsprechenden oszillierenden Bewegung des Mähmessers, das mit dem dem Drehgelenk gegenüberliegenden Endbereich der Schwinge gekoppelt ist. Ein Schwenkwinkelbereich, innerhalb dessen die Schwinge um das Drehgelenk oszillierend bewegbar ist, kann beispielsweise 20°, das heißt 10° zu beiden Seiten einer Nullstellung, betragen. Bei Vorliegen der Schwinge in seiner Nullstellung erstreckt sich das Mähmesser vorteilhafterweise in horizontale Richtung senkrecht zu einer Längsachse der Schwinge. Mit anderen Worten ist eine Gelenkachse des Drehgelenks der Schwinge senkrecht zu einer Schnittebene des Mähsegments orientiert. Diese Anordnung bewirkt bei Ausführung eine Schwenkbewegung der Schwinge fast ausschließlich eine oszillierende Horizontalbewegung des jeweiligen Mähmessers, das heißt eine Bewegung parallel einer Schnittebene des Mähsegments. Dabei versteht es sich, dass das Mähmesser infolge der Koppelung mit der Schwinge grundsätzlich auf einem Kreisbogen um das Drehgelenk bewegt wird; aufgrund des geringen Schwenkwinkelbereichs ist ein sogenannter "Vertikalhub" des angetriebenen Mähmessers, das heißt der Bewegungsanteil, der sich in der Schnittebene senkrecht zur Breitenrichtung des Schneidwerks erstreckt, sehr gering. Er ergibt sich zum Sinus des Betrags des Schwenkwinkels der Schwinge beidseits von ihrer Nullstellung. Dieser geringe Vertikalhub des jeweiligen Mähmessers vermeidet eine ungewollte Biegung des Mähmessers und führt im Ergebnis zu seinem sauberen Schnitt.

Um den vorstehend als "Vertikalhub" beschriebenen Bewegungsanteil des Mähmessers möglichst gering zu halten, kann weiterhin ein solches Schneidwerk vorteilhaft sein, dessen Schwinge langgestreckt ausgebildet ist. Vorzugsweise beträgt eine sich zwischen dem Drehgelenk und dem Kopplungsmittel erstreckende Länge der Schwinge mindestens 500 mm, vorzugsweise mindestens 600 mm, weiter vorzugsweise mindestens 700 mm.

Vorteilhafterweise ist die Anlenkstelle des Exzenters an der Schwinge dem zweiten Endbereich der Schwinge zugeordnet, das heißt demjenigen Endbereich, der mit dem Kopplungsmittel zusammenwirkt und mithin den Mähmessern zugewandt ist. Vorzugsweise beträgt ein Abstand zwischen dem Kopplungsmittel und der Anlenkstelle des Exzenters maximal 40 %, vorzugsweise maximal 30 %, weiter vorzugsweise maximal 20 % der Länge der Schwinge. Der geringe Abstand zwischen der Anlenkstelle und dem Kopplungsmittel entspricht umgekehrt einem relativ großen Abstand zwischen der Anlenkstelle und dem Drehgelenk der Schwinge. Dies hat zur Folge, dass eine quer zu der Längsachse der Schwinge bewirkte Bewegung der Schwinge einen vergleichsweise geringen Winkelbereich aufweist, der in der gewünschten Weise gemäß vorstehender Erläuterung hauptsächlich zu einer horizontalen Bewegung des Mähmessersparallel zur Breitenrichtung des Schneidwerks führt. Ferner dient das Verhältnis einer geeigneten Kraftübersetzung zwischen dem Kurbelgetriebe und dem jeweiligen Mähmesser, sodass eine ausreichende Schneidkraft zum Schneiden der zu erntenden Pflanzen zur Verfügung gestellt werden kann.

Sofern das mindestens eine Kurbelgetriebe mit einem Exzenter ausgestattet ist, ist es weiterhin von besonderem Vorteil, wenn der Exzenter mittels mindestens einer Koppelstange an der Schwinge angelenkt ist. Mittels einer solchen Koppelstange ist eine Bewegung des Exzenters besonders einfach auf die Schwinge übertragbar, wobei die Koppelstange sowohl an dem Exzenter als auch an der Schwinge jeweils unter Ausbildung eines Drehgelenks angelenkt ist. Die rotierende Bewegung des Exzenters kann auf diese Weise besonders einfach in eine oszillierende "Hin-und-Her-Bewegung" übersetzt werden.

Vorzugsweise ist das Kurbelgetriebe an einem vorderseitigen Ende des Schneidwerks, das heißt in der Nähe der Mähsegmente, angeordnet. Auf diese Weise ist ein Abstand zwischen dem Kurbelgetriebe und dem jeweiligen Mähsegment bzw. dem oder den zugeordneten Mähmessern gering, sodass zwecks Übertragung einer Bewegung von dem Kurbelgetriebe auf die Mähmesser nur kurze Strecken überwunden werden müssen. Vorteilhafterweise umfasst die Antriebseinrichtung dabei mindestens eine Gelenkwelle, die mit dem Kurbelgetriebe zusammenwirkt und sich senkrecht zu der Breitenrichtung, das heißt gewissermaßen in Längsrichtung des Schneidwerks erstreckt. Die Gelenkwelle dient dazu, ein mittels einer Antriebswelle bereitgestelltes Drehmoment auf das Kurbelgetriebe zu übertragen und letzteres hierdurch anzutreiben.

Vorteilhafterweise ist eine solche Gelenkwelle teleskopierbar, vorzugsweise doppelt teleskopierbar, ausgebildet. Auf diese Weise kann die Gelenkwelle insbesondere einer Bewegung eines Tischauslegers folgen, der eine in Längsrichtung des Schneidwerks ausgeführte Bewegung relativ zu der übrigen Tragwerkstruktur des Schneidwerks ermöglicht.

In einer überdies vorteilhaften Ausgestaltung des erfindungsgemäßen Schneidwerks weist die Antriebseinrichtung mindestens ein Riemengetriebe auf, das vorzugsweise an einem rückseitigen Ende des Schneidwerks angeordnet ist, wobei das rückseitige Ende dasjenige Ende des Schneidwerks beschreibt, das den frontseitig angeordneten Mähsegmenten gegenüberliegend angeordnet ist. Die Ausgestaltung der Antriebseinrichtung mit einem Riemengetriebe ist insoweit besonders vorteilhaft, als es Drehmomentspitzen des Antriebsstrangs dämpft und als Überlastelement dient. Ferner ist das Riemengetriebe besonders gut geeignet, eine Kraftübertragung "in Hochrichtung" des Schneidwerks zu bewerkstelligen. Insbesondere ist es denkbar, ein von einer Antriebswelle zur Verfügung gestelltes Drehmoment mittels eines Kraftriemens auf das unterhalb des Schneidwerkstischs befindliche Höhenniveau zu übertragen und auf diese Weise beispielsweise eine Gelenkwelle anzutreiben, mittels der das Drehmoment sodann in einen vorderen Bereich des Schneidwerks zu dem Kurbelgetriebe geführt wird.

Sofern eine Mehrzahl von Kurbelgetrieben vorgesehen ist, insbesondere zwei Kurbelgetriebe, ist es vorteilhaft, wenn jedem Mähsegment des Schneidwerks jeweils ein Kurbelgetriebe zugeordnet ist, wobei jedes der Kurbelgetriebe einen Exzenter aufweist. Um Vibrationen der Mähsegmente auf ein Minimum zu reduzieren, ist es bei einer solchen Ausgestaltung besonders vorteilhaft, wenn die Exzenter der Kurbelgetriebe gegeneinander derart phasenverschoben sind, dass sich zumindest ihre in Breitenrichtung des Schneidwerks bewirkten Bewegungen möglichst aufheben. Für den besonders vorteilhaften Fall, dass das Schneidwerk mit zwei Kurbelgetrieben ausgestattet ist, die jeweils einem der beiden Mähsegmente zugeordnet sind, ist es entsprechend besonders vorteilhaft, wenn die Exzenter um einen Phasenwinkel von π gegeneinander phasenverschoben sind. Auf diese Weise gleichen sich die Schwingungen der Exzenter gegeneinander aus, sodass die Vibrationen an dem Schneidwerk minimal sind. Zudem wird der besondere Vorteil erzielt, dass die Massenschwingungen der Mähmesser minimal sind, wodurch der Komfort für den Maschinenführer des zugehörigen Mähdreschers erhöht wird.

Für den Fall, dass das Schneidwerk mit einer Mehrzahl von Kurbelgetrieben ausgestattet ist, ist es besonders vorteilhaft, wenn mindestens zwei Kurbelgetriebe, vorzugsweise sämtliche Kurbelgetriebe, mittels einer Verbindungswelle miteinander verbunden sind. Auf diese Weise ist die Möglichkeit geschaffen, lediglich eines der Kurbelgetriebe unmittelbar anzutreiben, beispielsweise mittels einer vorstehend beschriebenen Gelenkwelle, und das auf dieses Kurbelgetriebe übertragene Drehmoment auf die anderen Kurbelgetriebe mittels der Verbindungswelle zu übertragen. Sinnvollerweise sind die Kurbelgetriebe bezogen auf ein vorderes Ende des Schneidwerks, das mit den Mähsegmenten korrespondiert, im gleichen Abstand zu den Mähsegmenten angeordnet, sodass sich die Verbindungswelle(n) vorzugsweise parallel zu der Breitenrichtung des Schneidwerks erstrecken. Vorzugsweise weist mindestens eine jeweilige Verbindungswelle mindestens eine Schwungmasse auf, um die Charakteristik des Antriebs des von der Verbindungswelle abhängenden Kurbelgetriebes zu verbessern.

In einer weiterhin vorteilhaften Ausgestaltung des erfindungsgemäßen Schneidwerks umfasst die Antriebseinrichtung mindestens ein T-Getriebe, mittels dessen ein mittels einer Antriebswelle zur Verfügung gestelltes Drehmoment auf zwei Abtriebswellen aufteilbar ist. Eine erste Abtriebswelle kann dabei insbesondere mittelbar oder unmittelbar zum Antrieb mindestens eines Kurbelgetriebes dienen, während die andere Abtriebswelle insbesondere mittelbar oder unmittelbar zum Antrieb mindestens eine Einzugswalze des Schneidwerks dienen kann. Die Ausgestaltung der Antriebseinrichtung mit dem genannten T-Getriebe ist demzufolge besonders gut geeignet, ein zur Verfügung gestelltes Drehmoment zwischen den verschiedenen Arbeitsorganen des Schneidwerks aufzuteilen.

In einer weiterhin vorteilhaften Ausgestaltung des erfindungsgemäßen Schneidwerks weist selbiges einen Tischausleger auf, der in eine Richtung senkrecht zu der Breitenrichtung des Schneidwerks (das heißt in eine Längsrichtung des letzteren) zwischen einer Vorderstellung und einer Rückstellung bewegbar ist. Bei Vorliegen in seiner Vorderstellung ist der Tischausleger maximal nach vorne ausgefahren, sodass ein Abstand zwischen den Mähmessern und der Einzugswalze des Schneidwerks maximal ist. Entsprechend umgekehrt ist der Tischausleger bei Vorliegen in seiner Rückstellung maximal nach hinten eingefahren, sodass der Abstand zwischen den Mähmessern und der Einzugswalze minimal ist. Mittels eines solchen Tischauslegers kann besonders einfach auf sich ändernde Ernteparameter reagiert werden. Dies kann beispielsweise die Art eines zu erntenden Getreides, dessen Feuchtigkeit und/oder dessen Dichte betreffen.

Die Erfindung ist nachstehend anhand eines Ausführungsbeispiels, das in den Figuren dargestellt ist, näher erläutert. Es zeigt:
- Fig. 1:: Eine perspektivische Ansicht eines erfindungsgemäßen Schneidwerks,
- Fig. 2:: Eine weitere perspektivische Ansicht des Schneidwerks gemäß Figur 1, jedoch von einer Unterseite,
- Fig. 3:: Ein Detail zweier Mähsegmente des Schneidwerks gemäß Figur 1, die jeweils mit einem Kurbelgetriebe zusammenwirken,
- Fig. 4:: Ein Detail einer Antriebseinrichtung des Schneidwerks gemäß Figur 1 betrachtet von einer Rückseite des Schneidwerks,
- Fig. 5:: Ein Detail eines Kurbelgetriebes des Schneidwerks gemäß Figur 1 in Zusammenwirkung mit einer Schwinge und
- Fig. 6:: Eine Draufsicht des Kurbelgetriebes gemäß Figur 5.

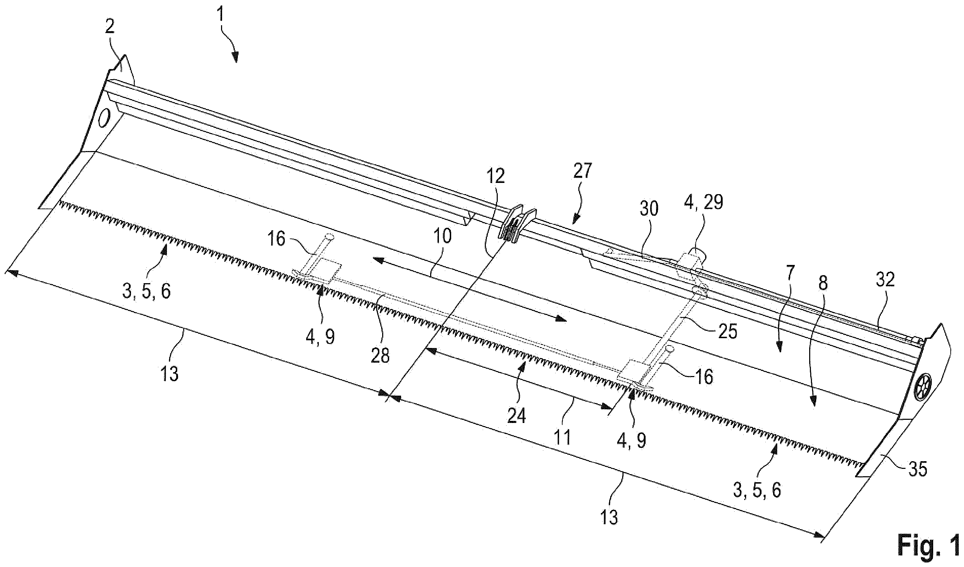

Ein Ausführungsbeispiel, das in den **Figuren 1 bis 6** dargestellt ist, umfasst ein erfindungsgemäßes Schneidwerk **1** eines Mähdreschers, das eine Tragwerksstruktur **2** aufweist. An der Tragwerkstruktur **2** ist ein Mähbalken **3** angeordnet, der sich in eine Breitenrichtung **10** des Schneidwerks **1** über eine gesamte Breite des Schneidwerks **1** erstreckt. Der Mähbalken **3** umfasst in dem gezeigten Beispiel zwei Mähsegmente **6,** die wiederum jeweils zwei Mähmesser **5** aufweisen. Die Mähsegmente **6** erstrecken sich jeweils über eine halbe Breite **13** des Schneidwerks **1.** Die Mähmesser **5** sind relativ zueinander bewegbar, wobei ein erstes Mähmesser **5** eines jeweiligen Mähsegments **6** als stehendes Untermesser und das zweite Mähmesser **5** mittels einer Antriebseinrichtung **4** des Schneidwerks **1** bewegbar ausgebildet sind. Insbesondere ist das bewegbare Mähmesser mittels der Antriebseinrichtung **4** oszillierend hin-und-her bewegbar, sodass sich in Zusammenwirkung mit dem feststehenden Mähmesser **5** die gewünschte Schneidwirkung ergibt.

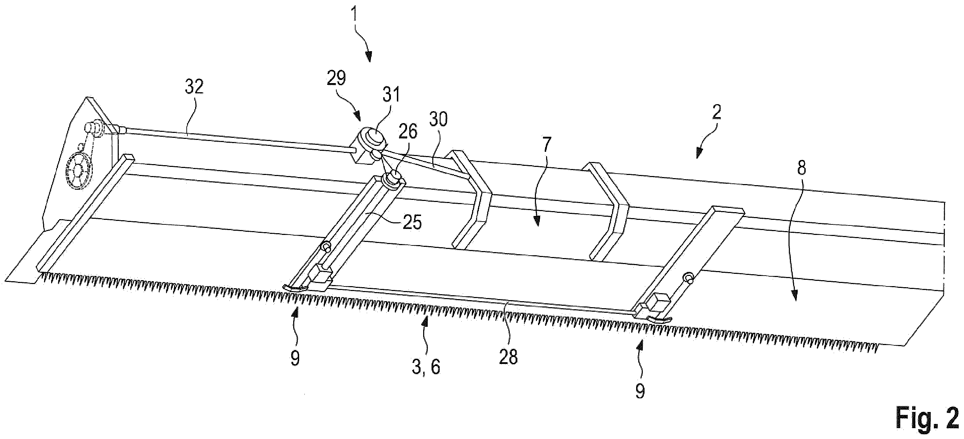

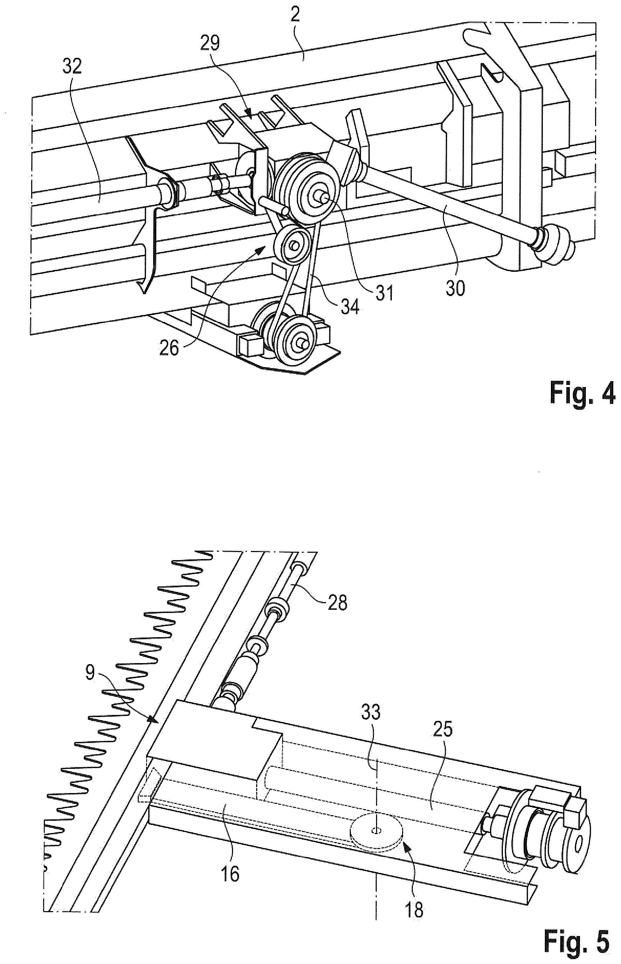

Die Antriebseinrichtung **4** umfasst in dem gezeigten Beispiel eine Antriebswelle **30,** die typischerweise von einer übergeordneten landwirtschaftlichen Erntemaschine des Schneidwerks **1** angetrieben wird. Die Antriebswelle **30** ist an einem rückseitigen Ende **27** des Schneidwerks **1** angeordnet und wirkt mit einem T-Getriebe **29** zusammen. Letzteres ergibt sich besonders gut anhand von **Figur 4****.** Mittels des besagten T-Getriebes **29** wird ein mittels der Antriebswelle **30** zur Verfügung gestelltes Drehmoment auf zwei separate Abtriebswellen **31, 32** aufgeteilt. Die erste Abtriebswelle **32** wirkt mittelbar mit einer in den Figuren nicht dargestellten Einzugswalze zusammen, sodass die Einzugswalze drehantreibbar ist. Hierzu verfügt das Schneidwerk **1** im Bereich seines Seitenteils **35** über ein entsprechendes Riemengetriebe. Die zweite Abtriebswelle **31** wirkt ihrerseits unmittelbar mit einem Riemengetriebe **26** zusammen, das hier einen Verbundriemen **34** aufweist, der die Abtriebswelle **31** in Drehmoment übertragender Weise mit einer Gelenkwelle **25** verbindet. Letztere ergibt sich besonders gut von **Figur 5****,** während sich der Aufbau der Antriebseinrichtung **4** insgesamt besonders gut anhand von **Figur 2** ergibt. Mittels der Gelenkwelle **25** wird das Drehmoment an ein Kurbelgetriebe 9 übertragen, das an einem vorderseitigen Ende **24** des Schneidwerks **1** angeordnet ist. Insbesondere ist das Kurbelgetriebe **9** in unmittelbarer Nähe zu dem ihm zugeordneten Mähsegment **6** angeordnet. Die Gelenkwelle **25** dient mithin dazu, das zur Verfügung gestellte Drehmoment von dem rückseitigen Ende **27** des Schneidwerks in Längsrichtung des Schneidwerks **1** zu dessen vorderseitigem Ende **24** zu übertragen. Die Gelenkwelle **25** ist entsprechend langgestreckt ausgebildet und weist hier eine Länge von 1350 mm auf.

Das hier gezeigte erfindungsgemäße Schneidwerk **1** verfügt über insgesamt zwei Kurbelgetrieben **9,** die jeweils einem der Mähsegmente **6** zugeordnet sind. Erfindungsgemäß sind die Kurbelgetriebe **9** außermittig bezogen auf eine querseitige Mitte **12** des Schneidwerks **1** angeordnet, wobei sie sich jeweils in einem in Breitenrichtung **10** gemessenen Abstand **11** von der Mitte **12** befinden. Der Abstand **11** entspricht in dem gezeigten Beispiel jeweils ca. 40 % der halben Breite **13** des Schneidwerks **1.** Die beiden Kurbelgetriebe **9** sind mittels einer Verbindungswelle **28** miteinander verbunden, mittels derer das mit der Gelenkwelle **25** dem ersten Kurbelgetriebe **9** zur Verfügung gestellte Drehmoment auf das andere Kurbelgetriebe **9** übertragbar ist. Auf diese Weise kann ein unmittelbarer Anschluss des zweiten Kurbelgetriebes **9** an eine eigene Gelenkwelle unterbleiben.

Beide Kurbelgetriebe **9** sind unterhalb eines Schneidwerkstischs 7 des Schneidwerks 1 angeordnet. Dies ergibt sich besonders gut anhand der Darstellung gemäß **Figur 2****,** die den Verlauf der Gelenkwelle **25** sowie den Installationsort der Kurbelgetriebe **9** verdeutlicht. Die Anordnung der Kurbelgetriebe **9** unterhalb des Schneidwerkstischs **7** ist besonders vorteilhaft, da die Tragwerksstruktur **2** kaum beeinflusst wird, insbesondere kaum eine Schwächung der letzteren zu beklagen ist. In Kombination mit der außermittigen Anordnung der Kurbelgetriebe **9** bezogen auf die querseitige Mitte **12** des Schneidwerks **1** wird hierdurch erreicht, dass eine Steifigkeit und Tragfähigkeit der Tragwerkstruktur **2** infolge der Anordnung der Kurbelgetriebe **9** kaum negativ beeinträchtigt wird.

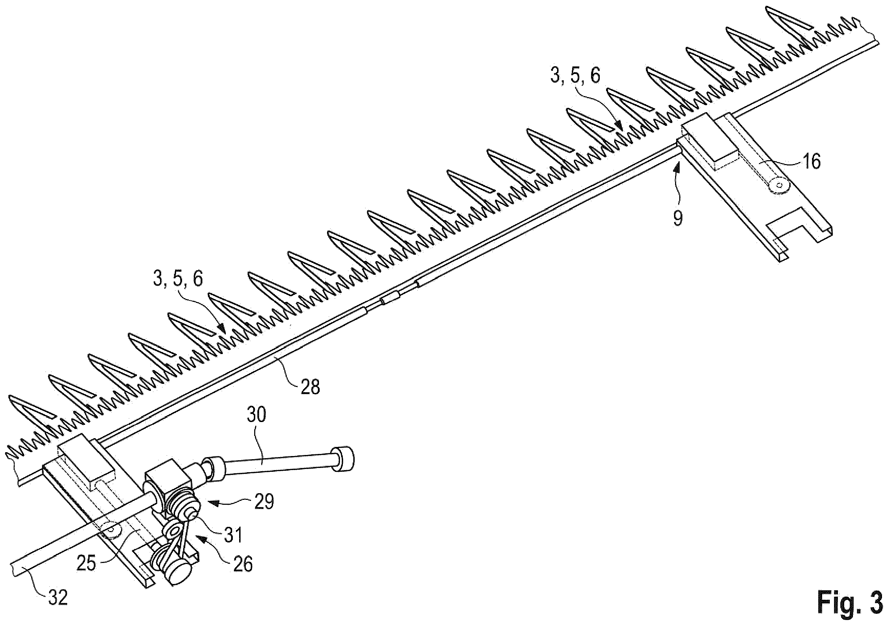

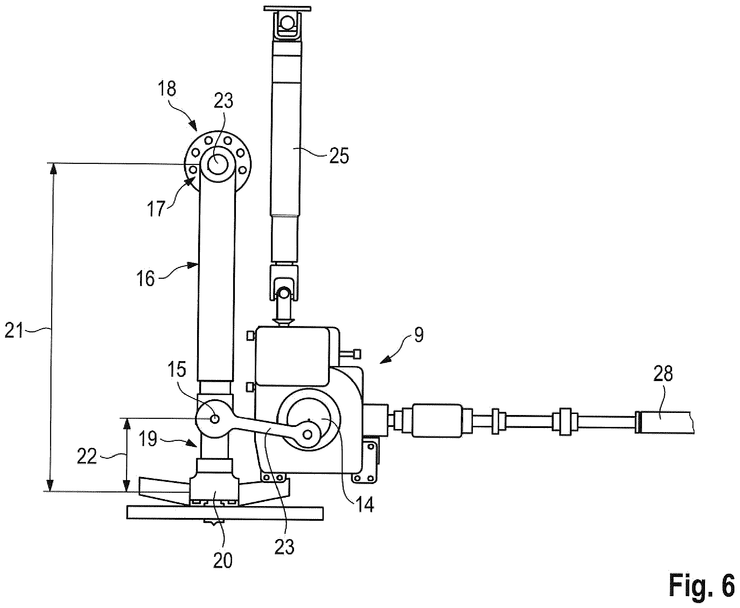

Die Antriebseinrichtung **4** ist in ihrer Gesamtheit besonders gut anhand der vereinfachten Darstellung gemäß **Figur 3** erkennbar, die neben der Antriebseinrichtung **4** bzw. ihre einzelnen Komponenten lediglich noch den Mähbalken **3** darstellt. In Kombination mit den Darstellungen in den **Figuren 5** **und** **6** ergibt sich, dass die Kurbelgetriebe **9** des hier gezeigten erfindungsgemäßen Schneidwerks **1** jeweils einen Exzenter **14** aufweisen, der drehantreibbar an dem Kurbelgetriebe **9** gelagert ist. Die Konstruktion der Kurbelgetriebe **9** in Zusammenwirkung mit den Mähsegmenten **6** wird nachfolgende exemplarisch für das mit der Gelenkwelle **25** verbundene der Kurbelgetriebe **9** beschrieben. Die Funktionsweise gilt für das andere Kurbelgetriebe **9** analog.

Das Kurbelgetriebe **9** ist dazu geeignet, das mittels der Gelenkwelle **25** zur Verfügung gestellte Drehmoment in eine Rotationsbewegung des Exzenters **14** zu übersetzen. Der Exzenter **14** ist seinerseits mittels einer Koppelstange **23** mit einer neben dem Kurbelgetriebe **9** angeordneten Schwinge **16** gekoppelt. Der Exzenter **14** und die Koppelstange **23** bilden gemeinsam gewissermaßen die "Kurbel" des Kurbelgetriebes **9.** Die Koppelstange **23** ist an ihrem dem Exzenter **14** abgewandten Ende an einer Anlenkstelle **15** mit der Schwinge **16** verbunden. Beide Enden der Koppelstange **23,** das heißt zum einen an den Exzenter **14** und zum anderen an der Schwinge **16,** sind jeweils gelenkig ausgebildet, sodass die rotierende Bewegung des Exzenters **14** in eine quasi lineare Bewegung der Anlenkstelle **15** übertragbar ist. Die Schwinge **16** weist zwei einander gegenüberliegende Endbereiche **17, 19** auf, wobei die Schwinge **16** an ihrem ersten Endbereich **17** unter Ausbildung eines Drehgelenks **18** an dem Schneidwerkstisch **7** des Schneidwerks **1** gelagert ist. An dem zweiten Endbereiche **19** ist die Schwinge **16** mittels eines Kopplungsmittels **20** in Kraft übertragender Weise mit dem Mähmesser **5** des dem Kurbelgetriebe **9** zugeordneten Mähsegments **6** verbunden, das bewegbar ausgebildet ist. Der Betrieb des Exzenters **14** des Kurbelgetriebes **9** führt angesichts dieser Anordnung dazu, dass die Schwinge **16** oszillierend um eine Gelenkachse **33** des Drehgelenks **18** hin-und-her geschwenkt wird, wodurch in gewünschter Weise eine gleichermaßen oszillierende Hin-und Her-Bewegung des zugeordneten Mähmessers **5** auftritt.

Die Gelenkwelle **25** ist in dem gezeigten Beispiel teleskopierbar ausgebildet, sodass sich eine Länge **21** der Schwinge **16** verändern lässt. Dies ist in dem gezeigten Beispiel besonders vorteilhaft, da das Schneidwerk **1** über einen Tischausleger **8** verfügt, der in Längsrichtung des Schneidwerks **1,** das heißt quer zu der Breitenrichtung **10,** bewegbar ist. Mittels der teleskopierbaren Ausgestaltung der Gelenkwelle **25** ist die Möglichkeit gegeben, den Tischausleger **8** axial zwischen einer Vorstellung und einer Rückstellung zu verfahren, ohne dass die Kurbelgetriebe **9** ihre Funktionalität einbüßen.

Die Anlenkstelle **15** der Koppelstange **23** an der Schwinge **16** befindet sich in dem gezeigten Beispiel in einem Abstand **22** von dem Kopplungsmittel **20.** Dieser Abstand **22** beträgt in dem gezeigten Beispiel 25 % der gesamten Länge **21** der Schwinge **16.** Die Anordnung der Anlenkstelle **15** in einem solchen, dem zweiten Endbereichen **19** zugewandten Bereich der Schwinge **16** führt dazu, dass auf die Koppelstange **23** einwirkende Kräfte niedriger sind. Die zur Verfügung stehende Schneidkraft des betroffenen Mähmessers **5** ist entsprechend stark ausgebildet. Eine Längsachse der Schwinge **16** ist zudem senkrecht zu einer Längsachse des ihr zugeordneten Mähmesser **5** angeordnet. Dies führt dazu, dass die Bewegung des Mähmessers **5** im Zuge des Betriebs des Kurbelgetriebes **9** sich fast ausschließlich parallel zu der Breitenrichtung **10** des Schneidwerks **1** erstreckt und kaum einen Bewegungsanteil aufweist, der sich in Längsrichtung, das heißt senkrecht zu der Breitenrichtung **10,** erstreckt.

### Bezugszeichenliste

- 1: Schneidwerk
- 2: Tragwerksstruktur
- 3: Mähbalken
- 4: Antriebseinrichtung
- 5: Mähmesser
- 6: Mähsegment
- 7: Schneidwerkstisch
- 8: Tischausleger
- 9: Kurbelgetriebe
- 10: Breitenrichtung
- 11: Abstand
- 12: Mitte
- 13: halbe Breite
- 14: Exzenter
- 15: Anlenkstelle
- 16: Schwinge
- 17: erster Endbereich
- 18: Drehgelenk
- 19: zweiter Endbereich
- 20: Kopplungsmittel
- 21: Länge
- 22: Abstand
- 23: Koppelstange
- 24: vorderseitiges Ende
- 25: Gelenkwelle
- 26: Riemengetriebe
- 27: rückseitiges Ende
- 28: Verbindungswelle
- 29: T-Getriebe
- 30: Antriebswelle
- 31: Abtriebswelle
- 32: Abtriebswelle
- 33: Gelenkachse
- 34: Zahnriemen
- 35: Seitenteil

## Patentansprüche

1. Schneidwerk (1) für eine landwirtschaftliche Erntemaschine, insbesondere für einen Mähdrescher, umfassend
- einen langgestreckten, sich in Breitenrichtung (10) des Schneidwerks (1) erstreckenden Mähbalken (3) sowie
- eine mit dem Mähbalken (3) zusammenwirkende Antriebseinrichtung (4),
wobei der Mähbalken (3) mindestens ein mit Mähmessern (5) versehenes Mähsegment (6) aufweist,
wobei die Mähmesser (5) des Mähsegments (6) mittelbar oder unmittelbar mittels der Antriebseinrichtung (4) derart relativ zueinander oszillierend antreibbar sind, dass zu erntende Pflanzen schneidbar sind,
**dadurch gekennzeichnet, dass**
die Antriebseinrichtung (4) mindestens ein Kurbelgetriebe (9) umfasst,
wobei das Kurbelgetriebe (9) außermittig bezogen auf das Schneidwerk (1) angeordnet ist und
wobei das Kurbelgetriebe (9) unterhalb eines Schneidwerkstischs (7) des Schneidwerks (1) angeordnet ist.

2. Schneidwerk (1) nach Anspruch 1, **dadurch gekennzeichnet, dass** ein seitlicher, parallel zur Breitenrichtung (10) des Schneidwerks (1) gemessener Abstand (11) zwischen dem mindestens einen Kurbelgetriebe (9) und einer querseitigen Mitte (12) des Schneidwerks (1) mindestens 20 %, vorzugsweise mindestens 30 %, weiter vorzugsweise mindestens 40 %, einer halben Breite (13) des Schneidwerks (1) beträgt.

3. Schneidwerk (1) nach Anspruch 1 oder 2, **gekennzeichnet durch** eine Mehrzahl von Kurbelgetrieben (9), insbesondere zwei Kurbelgetriebe (9), wobei sämtliche Kurbelgetriebe (9) außermittig bezogen auf das Schneidwerk (1) angeordnet sind, wobei die Kurbelgetriebe (9) vorzugsweise symmetrisch bezogen auf eine querseitige Mitte (12) des Schneidwerks (1) angeordnet sind.

4. Schneidwerk (1) nach einem der Ansprüche 1 bis 3, **gekennzeichnet durch** eine Mehrzahl von Kurbelgetrieben (9), insbesondere zwei Kurbelgetriebe (9), wobei sämtliche Kurbelgetriebe (9) unterhalb des Schneidwerkstischs (7) angeordnet sind.

5. Schneidwerk (1) nach einem der Ansprüche 1 bis 4, **dadurch gekennzeichnet, dass** das Kurbelgetriebe (9) einen Exzenter (14) aufweist, der an einer Anlenkstelle (15) einer Schwinge (16) angelenkt ist, wobei die Schwinge (16) in einem ersten Endbereich (17) unter Ausbildung eines Drehgelenks (18) gelenkig gelagert und an ihrem gegenüberliegenden zweiten Endbereich (19) mittels eines Kopplungsmittels (20) mit mindestens einem der Mähmesser (5) gekoppelt ist, sodass das Mähmesser (5) mittels Antriebs des Exzenters (14) in eine oszillierende Bewegung versetzbar ist.

6. Schneidwerk (1) nach Anspruch 5, **dadurch gekennzeichnet, dass** die Schwinge (16) langgestreckt ausgebildet ist, wobei vorzugsweise eine sich zwischen dem Drehgelenk (18) und dem Kopplungsmittel (20) erstreckende Länge (21) der Schwinge (16) mindestens 500 mm, vorzugsweise mindestens 600 mm, weiter vorzugsweise mindestens 700 mm, beträgt.

7. Schneidwerk (1) nach Anspruch 5 oder 6, **dadurch gekennzeichnet, dass** die Anlenkstelle (15) des Exzenters (14) dem dem Kopplungsmittel (20) zugeordneten zweiten Endbereich (19) der Schwinge (16) zugeordnet ist, wobei vorzugsweise ein Abstand (22) zwischen dem Kopplungsmittel (20) und der Anlenkstelle (15) maximal 40 %, vorzugsweise maximal 30 %, weiter vorzugsweise maximal 20 %, einer Länge (21) der Schwinge (16) beträgt.

8. Schneidwerk (1) nach einem der Ansprüche 1 bis 7, **dadurch gekennzeichnet, dass** das Kurbelgetriebe (9) an einem vorderseitigen Ende (24) des Schneidwerks (1) angeordnet ist, wobei vorzugsweise die Antriebseinrichtung (4) mindestens eine Gelenkwelle (25) aufweist, die mit dem Kurbelgetriebe (9) zusammenwirkt und sich senkrecht zu der Breitenrichtung (10) des Schneidwerks (1) erstreckt.

9. Schneidwerk (1) nach Anspruch 8, **dadurch gekennzeichnet, dass** die Gelenkwelle (25) teleskopierbar, vorzugsweise doppelt teleskopierbar, ausgebildet ist.

10. Schneidwerk (1) nach einem der Ansprüche 1 bis 9, **dadurch gekennzeichnet, dass** die Antriebseinrichtung (4) mindestens ein Riemengetriebe (26) aufweist, das vorzugsweise an einem rückseitigen Ende (27) des Schneidwerks (1) angeordnet ist.

11. Schneidwerk (1) nach einem der Ansprüche 1 bis 10, **gekennzeichnet durch** eine Mehrzahl von Kurbelgetrieben (9), vorzugsweise zwei Kurbelgetriebe (9), sowie mindestens zwei Mähsegmente (6), wobei die Kurbelgetriebe (9) jeweils einem Mähsegment (6) zugeordnet sind und jeweils einen Exzenter (14) aufweisen, die gegeneinander phasenverschoben ausgebildet sind, vorzugsweise um einen Phasenwinkel von π.

12. Schneidwerk (1) nach Anspruch 11, **dadurch gekennzeichnet, dass** die Kurbelgetriebe (9) untereinander mittels einer Verbindungswelle (28) miteinander verbunden sind, sodass ein auf eines der Kurbelgetriebe (9) übertragendes Drehmoment mittels der Verbindungswelle (28) an das/die weitere(n) Kurbelgetriebe (9) übertragbar ist, wobei sich die Verbindungswelle (28) vorzugsweise parallel zu der Breitenrichtung (10) des Schneidwerks (1) erstreckt.

13. Schneidwerk (1) nach Anspruch 12, **dadurch gekennzeichnet, dass** mindestens eine Verbindungswelle (28) mindestens eine Schwungmasse aufweist.

14. Schneidwerk (1) nach einem der Ansprüche 1 bis 13, **dadurch gekennzeichnet, dass** die Antriebseinrichtung (4) mindestens ein T-Getriebe (29) aufweist, mittels dessen ein mittels einer Antriebswelle (30) zur Verfügung gestelltes Drehmoment auf zwei Abtriebswellen (31, 32) aufteilbar ist, wobei vorzugsweise eine erste Abtriebswelle (31) zum zumindest mittelbaren Antrieb des mindestens einen Kurbelgetriebes (9) und die zweite Abtriebswelle (32) zum zumindest mittelbaren Antrieb mindestens einer Einzugswalze (33) des Schneidwerks (1) dient.

15. Schneidwerk (1) nach einem der Ansprüche 1 bis 14, **dadurch gekennzeichnet, dass** der Schneidwerkstisch (7) einen Tischausleger (8) umfasst, der in eine Richtung senkrecht zu der Breitenrichtung (10) des Schneidwerks (1) zwischen einer maximal nach vorne ausgefahrenen Vorderstellung und einer maximal nach hinten eingefahrenen Rückstellung bewegbar ist.

## Claims

1. A cutting assembly (1) for an agricultural harvesting machine, in particular for a combine harvester, comprising
- an elongated cutter bar (3) which extends in the width direction (10) of the cutting assembly (1), as well as
- a drive device (4) which cooperates with the cutter bar (3), wherein the cutter bar (3) has at least one cutter segment (6) provided with cutter blades (5),
wherein the cutter blades (5) of the cutter segment (6) can be driven indirectly or directly by means of the drive device (4) in an oscillating manner relative to each other such that the plants to be harvested can be cut,
**characterized in that**
the drive device (4) comprises at least one crank mechanism (9), wherein the crank mechanism (9) is disposed eccentrically with respect to the cutting assembly (1), and
wherein the crank mechanism (9) is disposed below a cutting assembly platform (7) of the cutting assembly (1).

2. The cutting assembly (1) according to claim 1, **characterized in that** a lateral distance (11) measured parallel to the width direction (10) of the cutting assembly (1) between the at least one crank mechanism (9) and a transverse centre (12) of the cutting assembly (1) is at least 20%, preferably at least 30%, more preferably at least 40% of a half width (13) of the cutting assembly (1).

3. The cutting assembly (1) according to claim 1 or claim 2, **characterized by** a plurality of crank mechanisms (9), in particular two crank mechanisms (9), wherein all of the crank mechanisms (9) are disposed eccentrically with respect to the cutting assembly (1), wherein the crank mechanisms (9) are preferably disposed symmetrically with respect to a transverse centre (12) of the cutting assembly (1).

4. The cutting assembly (1) according to one of claims 1 to 3, **characterized by** a plurality of crank mechanisms (9), in particular two crank mechanisms (9), wherein all of the crank mechanisms (9) are disposed below the cutting assembly platform (7).

5. The cutting assembly (1) according to one of claims 1 to 4, **characterized in that** the crank mechanism (9) has an eccentric (14) which is articulated at a pivot point (15) of a rocker arm (16), wherein the rocker arm (16) is pivotably mounted at a first end region (17) to form a swivel joint (18) and the opposing second end region (19) thereof is coupled by means of a coupling means (20) to at least one of the cutter blades (5), so that the cutter blade (5) can be displaced in an oscillating movement by drive from the eccentric (14).

6. The cutting assembly (1) according to claim 5, **characterized in that** the rocker arm (16) is elongated in configuration, wherein preferably, a length (21) of the rocker arm (16) between the swivel joint (18) and the coupling means (20) is at least 500 mm, preferably at least 600 mm, more preferably at least 700 mm.

7. The cutting assembly (1) according to claim 5 or claim 6, **characterized in that** the pivot point (15) of the eccentric (14) is associated with the second end region (19) of the rocker arm (16) associated with the coupling means (20), wherein preferably, a distance (22) between the coupling means (20) and the pivot point (15) is a maximum of 40%, preferably a maximum of 30%, more preferably a maximum of 20% of a length (21) of the rocker arm (16).

8. The cutting assembly (1) according to one of claims 1 to 7, **characterized in that** the crank mechanism (9) is disposed on a forward end (24) of the cutting assembly (1), wherein preferably, the drive device (4) has at least one universal joint shaft (25) which cooperates with the crank mechanism (9) and which extends perpendicular to the width direction (10) of the cutting assembly (1).

9. The cutting assembly (1) according to claim 8, **characterized in that** the universal joint shaft (25) is constructed so as to be telescopic, preferably doubly telescopic.

10. The cutting assembly (1) according to one of claims 1 to 9, **characterized in that** the drive device (4) has at least one belt drive (26) which is preferably disposed at a rear end (27) of the cutting assembly (1).

11. The cutting assembly (1) according to one of claims 1 to 10, **characterized by** a plurality of crank mechanisms (9), preferably two crank mechanisms (9), as well as at least two cutter segments (6), wherein each crank mechanism (9) is associated with a cutter segment (6) and has an eccentric (14) which is phase shifted with respect to the other, preferably by a phase angle of π.

12. The cutting assembly (1) according to claim 11, **characterized in that** the crank mechanisms (9) are connected together by means of a connecting shaft (28) so that a torque transmitted to one of the crank mechanisms (9) can be transmitted to the other crank mechanism(s) (9) by means of the connecting shaft (28), wherein the connecting shaft (28) preferably extends parallel to the width direction (10) of the cutting assembly (1).

13. The cutting assembly (1) according to claim 12, **characterized in that** at least one connecting shaft (28) has at least one balance weight.

14. The cutting assembly (1) according to one of claims 1 to 13, **characterized in that** the drive device (4) has at least one T gearbox (29) by means of which a torque provided via a drive shaft (30) can be distributed onto two take-off shafts (31, 32), wherein preferably, a first take-off shaft (31) serves for at least indirect drive of the at least one crank mechanism (9) and the second take-off shaft (32) serves for at least indirect drive of at least one feed roller (33) of the cutting assembly (1).

15. The cutting assembly (1) according to one of claims 1 to 14, **characterized in that** the cutting assembly platform (7) comprises a platform extender (8) which can be moved in a direction perpendicular to the width direction (10) of the cutting assembly (1) between a maximally forwardly extended forward position and a maximally rearwardly retracted rear position.

## Revendications

1. Tablier de coupe (1) pour une machine agricole de récolte, en particulier pour une moissonneusebatteuse, incluant
- un lamier allongé (3) s'étendant dans le sens de la largeur (10) du tablier de coupe (1) ainsi que
- un équipement d'entraînement (4) coopérant avec le lamier (3),
le lamier (3) comportant au moins un segment de coupe (6) muni de lames de coupe (5),
les lames de coupe (5) du segment de coupe (6) étant entrainables, indirectement ou directement, de manière oscillante les unes par rapport aux autres au moyen de l'équipement d'entraînement (4), de façon à pouvoir couper des plantes à récolter,
**caractérisé en ce que**
l'équipement d'entraînement (4) inclut au moins un mécanisme à manivelle (9),
le mécanisme à manivelle (9) étant disposé de manière décentrée par rapport au tablier de coupe (1) et
le mécanisme à manivelle (9) étant disposé au-dessous d'une table de tablier de coupe (7) du tablier de coupe (1).

2. Tablier de coupe (1) selon la revendication 1, **caractérisé en ce qu'**un écartement latéral (11), mesuré parallèlement au sens de la largeur (10) du tablier de coupe (1), entre le au moins un mécanisme à manivelle (9) et un milieu transversal (12) du tablier de coupe (1) est égal à au moins 20 %, de préférence à au moins 30 %, plus préférentiellement à au moins 40 %, d'une demi-largeur (13) du tablier de coupe (1).

3. Tablier de coupe (1) selon la revendication 1 ou 2, **caractérisé par** une pluralité de mécanismes à manivelle (9), en particulier par deux mécanismes à manivelle (9), tous les mécanismes à manivelle (9) étant disposés de manière décentrée par rapport au tablier de coupe (1), les mécanismes à manivelle (9) étant disposés de préférence symétriquement par rapport à un milieu transversal (12) du tablier de coupe (1).

4. Tablier de coupe (1) selon une des revendications 1 à 3, **caractérisé par** une pluralité de mécanismes à manivelle (9), en particulier par deux mécanismes à manivelle (9), tous les mécanismes à manivelle (9) étant disposés au-dessous de la table de tablier de coupe (7).

5. Tablier de coupe (1) selon une des revendications 1 à 4, **caractérisé en ce que** le mécanisme à manivelle (9) comporte un excentrique (14) qui est articulé sur un point d'articulation (15) d'une biellette (16), la biellette (16) étant montée de manière articulée dans une première zone d'extrémité (17) en formant une articulation tournante (18) et étant couplée dans sa seconde zone d'extrémité opposée (19) avec au moins une des lames de coupe (5) au moyen d'un moyen d'accouplement (20), de sorte que la lame de coupe (5) peut être animée d'un mouvement oscillant au moyen de l'entraînement de l'excentrique (14).

6. Tablier de coupe (1) selon la revendication 5, **caractérisé en ce que** la biellette (16) est de conception allongée, de préférence une longueur (21) de la biellette (16) s'étendant entre l'articulation tournante (18) et le moyen d'accouplement (20) étant égale à au moins 500 mm, de préférence à au moins 600 mm, plus préférentiellement à au moins 700 mm.

7. Tablier de coupe (1) selon la revendication 5 ou 6, **caractérisé en ce que** le point d'articulation (15) de l'excentrique (14) est associé à la seconde zone d'extrémité (19) de la biellette (16) associée au moyen d'accouplement (20), de préférence un écartement (22) entre le moyen d'accouplement (20) et le point d'articulation (15) étant égal à 40 % maximum, de préférence à 30 % maximum, plus préférentiellement à 20 % maximum, d'une longueur (21) de la biellette (16) .

8. Tablier de coupe (1) selon une des revendications 1 à 7, **caractérisé en ce que** le mécanisme à manivelle (9) est disposé sur une extrémité avant (24) du tablier de coupe (1), de préférence l'équipement d'entraînement (4) comportant au moins un arbre articulé (25) qui coopère avec le mécanisme à manivelle (9) et qui s'étend perpendiculairement au sens de la largeur (10) du tablier de coupe (1).

9. Tablier de coupe (1) selon la revendication 8, **caractérisé en ce que** l'arbre articulé (25) est conçu de façon télescopique, de préférence doublement télescopique.

10. Tablier de coupe (1) selon une des revendications 1 à 9, **caractérisé en ce que** l'équipement d'entraînement (4) comporte au moins une transmission à courroie (26) qui est disposée de préférence sur un côté arrière (27) du tablier de coupe (1).

11. Tablier de coupe (1) selon une des revendications 1 à 10, **caractérisé par** une pluralité de mécanismes à manivelle (9), de préférence par deux mécanismes à manivelle (9), ainsi que par deux segments de coupe (6), les mécanismes à manivelle (9) étant associés respectivement à un segment de coupe (6) et comportant respectivement un excentrique (14), lesquels sont conçus de manière déphasée l'un par rapport à l'autre, de préférence selon un angle de phase de n.

12. Tablier de coupe (1) selon la revendication 11, **caractérisé en ce que** les mécanismes à manivelle (9) sont reliés entre eux au moyen d'un arbre de liaison (28), de sorte qu'un moment de rotation transmissible à un des mécanismes à manivelle (9) est transmissible à l'autre/aux autres mécanisme(s) à manivelle (9) au moyen de l'arbre de liaison (28), l'arbre de liaison (28) s'étendant de préférence parallèlement au sens de la largeur (10) du tablier de coupe (1).

13. Tablier de coupe (1) selon la revendication 12, **caractérisé en ce qu'**au moins un arbre de liaison (28) comporte une masse d'inertie.

14. Tablier de coupe (1) selon une des revendications 1 à 13, **caractérisé en ce que** l'équipement d'entraînement (4) comporte au moins une transmission en T (29) au moyen de laquelle un moment de rotation fourni au moyen d'un arbre d'entraînement (30) peut être réparti sur deux arbres de sortie (31, 32), de préférence un premier arbre de sortie (31) servant à l'entraînement au moins indirect du au moins un mécanisme à manivelle (9) et le second arbre de sortie (32) servant à l'entraînement au moins indirect au moins d'un rouleau d'alimentation (33) du tablier de coupe (1).

15. Tablier de coupe (1) selon une des revendications 1 à 14, **caractérisé en ce que** la table de tablier de coupe (7) inclut un extenseur de table (8) qui est déplaçable dans une direction perpendiculaire au sens de la largeur (10) du tablier de coupe (1) entre une position avant sortie au maximum vers l'avant et une position arrière rentrée au maximum vers l'arrière.
